# EUROPEAN PATENT SPECIFICATION

(11) **EP 2 943 007 B1**
(45) Date of publication and mention of the grant of the patent: **10.07.2019**
(21) Application number: 14167587.6
(22) Date of filing: 08.05.2014
(51) Int. Cl.: H04W 36/04, H04W 56/00

(54) **Uplink timing of secondary cell**
Uplink-Zeitsteuerung einer Sekundärzelle
Synchronisation de liaison montante de cellule secondaire

(43) Date of publication of application: 11.11.2015
(73) Proprietor: FUJITSU LIMITED, Kawasaki-shi, Kanagawa 211-8588 (JP)
(72) Inventor: FANG, Yiwei, High Wycombe, HP11 1GD (GB); MOULSLEY, Timothy, Caterham, Surrey CR3 5EE (GB)
(74) Representative: Haseltine Lake Kempner LLP

(56) References cited:
- US-A1- 2010 157 906
- US-A1- 2014 086 213

## Description

### Field of the Invention

The present invention relates to a wireless communication method in which stations (terminals) connect to other stations in a wireless network. The present invention further relates to a wireless communication system, a terminal, a base station and a computer program for use in said method.

Particularly, but not exclusively, the present invention relates to a method of obtaining uplink timing of a secondary cell in a wireless communication system compliant with the LTE (Long Term Evolution) and LTE-Advanced radio technology standards as described in Release 11 and subsequent of the 3GPP specification series.

### Background of the Invention

Wireless communication systems are widely known in which base stations (BSs) communicate with user equipments (UEs) (also called terminals, subscriber or mobile stations) within range of the BSs.

The geographical area served by one or more base stations is generally referred to as a cell, and typically many BSs are provided in appropriate locations so as to form a network covering a wide geographical area more or less seamlessly with adjacent and/or overlapping cells. (In this specification, the terms "system" and "network" are used synonymously). Each BS may support one or more cells and in each cell, the BS divides its available bandwidth, i.e. frequency and time resources, into individual resource allocations for the user equipments which it serves. The UEs are generally mobile and therefore may move among the cells, prompting a need for handovers between the base stations of adjacent cells. A UE may be in range of (i.e. able to detect signals from and/or communicate with) several cells at the same time, but in the simplest case it communicates with one "serving" cell.

As the UE moves out of the coverage area of its current serving cell, after a measured signal strength with respect to a neighbour cell exceeds, by a sufficient margin, the signal strength with respect to the serving cell, the terminal transmits this information to the base station of the serving cell, and in one form of handover the serving base station or a higher-level node determines that a handover is required to another "destination" base station.

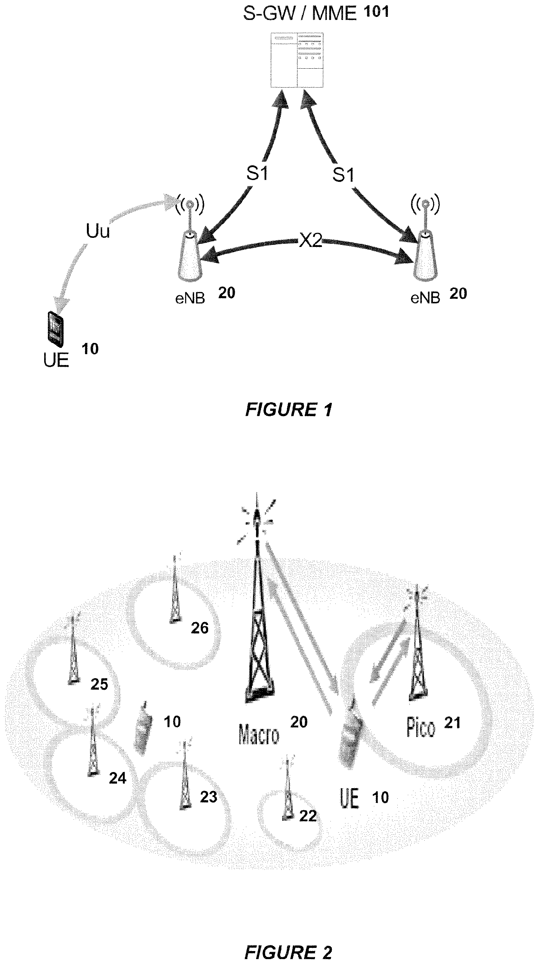

One type of cellular wireless network is based upon the set of standards referred to as Long-Term Evolution (LTE). The current version of the standard, Release 11 (Rel 11), is also referred to as LTE-A (LTE-Advanced). The network topology in LTE is illustrated in Figure 1. As can be seen, each terminal 10, called a UE in LTE, connects wirelessly over an air interface (labelled Uu in Figure 1) to a base station in the form of an enhanced node-B or eNB 20. It should be noted that various types of eNB are possible. An eNB may support one or more cells at different carrier frequencies, each cell having differing transmit powers and different antenna configurations, and therefore providing coverage areas (cells) of differing sizes. Multiple eNBs deployed in a given geographical area constitute a wireless network called the E-UTRAN (and henceforth generally referred to simply as "the network"). An LTE network can operate either in a Time Division Duplex, TDD, mode in which the uplink and downlink are separated in time but use the same carrier frequency, or Frequency Division Duplex, FDD, in which the uplink and downlink occur simultaneously at different carrier frequencies. Radio Resource Control (RRC) is a protocol layer in the UE and eNB to control various aspects of the air interface, including establishing, maintaining and releasing a RRC connection between the UE and eNB. Thus, for a UE to be served by a cell implies a RRC connection with the eNB providing or controlling that cell.

Each eNB 20 in turn is connected by a (usually) wired link (S1 in Figure 1) to higher-level or "core network" entities 101, including a Serving Gateway (S-GW), and a Mobility Management Entity (MME) for managing the system and sending control signalling to other nodes, particularly eNBs, in the network. In addition (not shown), a Packet Data Network (PDN) Gateway (P-GW) is present, separately or combined with the S-GW, to exchange data packets with any packet data network including the Internet. Thus, communication is possible between the LTE network and other networks. Meanwhile, the eNBs can communicate among themselves via a wired or wireless X2 interface as indicated in the Figure.

Figure 1 shows what is sometimes called a "homogeneous network"; that is, a network of base stations in a planned layout and which have similar transmit power levels, antenna patterns, receiver noise floors and similar backhaul connectivity to the core network. Current wireless cellular networks are typically deployed as homogeneous networks using a macro-centric planned process. The locations of the base stations are carefully decided by network planning, and the base station settings are properly configured to maximise the coverage and control the interference between base stations. However, future cellular wireless networks will adopt a "heterogeneous network" structure composed of two or more different kinds of cell, also referred to as a Small Cell Network or SCN.

The motivation for SCNs is the idea of network densification: increasing the number of network nodes, and thereby bringing them physically closer to the user terminals, in order to improve traffic capacity and extending the achievable user-data rates of a wireless communication system. SCNs achieve network densification by the deployment of complementary low-power nodes under the coverage of an existing macro-node layer. In such a heterogeneous deployment, the low-power nodes provide very high traffic capacity and very high user throughput locally, for example in indoor and outdoor hotspot positions. Meanwhile, the macro layer ensures service availability and Quality of Experience (QoE) over the entire coverage area. In other words, the layer containing the low-power nodes can also be referred to as providing local-area access, in contrast to the wide-area-covering macro layer.

Figure 2 depicts a simple SCN. The large ellipse represents the coverage area or footprint of a Macro cell provided by a base station (Macro BS) 20. The smaller ellipses represent small cells (also referred to as local or secondary cells) within the coverage area of the Macro cell, each having a respective low-power base station 21 - 26 (exemplified by Pico BS 21). Here, the Macro cell is a cell providing a "macro layer" of basic coverage in the network of a certain area, and the small cells are overlaid over the Macro cell, using the same or different carrier frequencies, providing a "low-power layer" for capacity boosting purposes particularly within so-called hot spot zones. A UE 10 is able to communicate both with Macro BS 20 and Pico BS 21 as indicated by the arrows in the Figure: when such communication occurs simultaneously, this is called "dual connectivity" of the UE. In this scenario, the Macro BS is a mobility anchor point for the UE, providing the control signalling for handovers of the UE between small cells. Whilst a Pico BS 21 is shown by way of example, it should be noted that various types of station can contribute to the "low-power layer", including other UEs if these can operate in a device-to-device (D2D) mode.

Thus, dual connectivity implies that the device has simultaneous connections to both macro and low-power layers. Dual connectivity may imply:
(a) Control and data separation where, for instance, the control signalling for mobility or other purposes is provided via the macro layer at the same time as high-speed data connectivity is provided via the low-power layer.
(b) A separation between downlink and uplink, where downlink and uplink connectivity is provided via different layers.
(c) Diversity for control signalling, where Radio Resource Control (RRC) signalling may be provided via multiple links, further enhancing mobility performance.

Macro assistance including dual connectivity may provide several benefits:
(i) Enhanced support for mobility - by maintaining the mobility anchor point in the macro layer, as described above, it is possible to maintain seamless mobility between macro and low-power layers, as well as between low-power nodes.
(ii) Low overhead transmissions from the low-power layer - by transmitting only information required for individual user experience, it is possible to avoid overhead coming from supporting idle-mode mobility within the local-area layer, for example.
(iii) Energy-efficient load balancing - by turning off the low-power nodes when there is no ongoing data transmission, it is possible to reduce the energy consumption of the low-power layer.
(iv) Per-link optimization - by being able to select the termination point for uplink and downlink separately, the node selection can be optimized for each link.

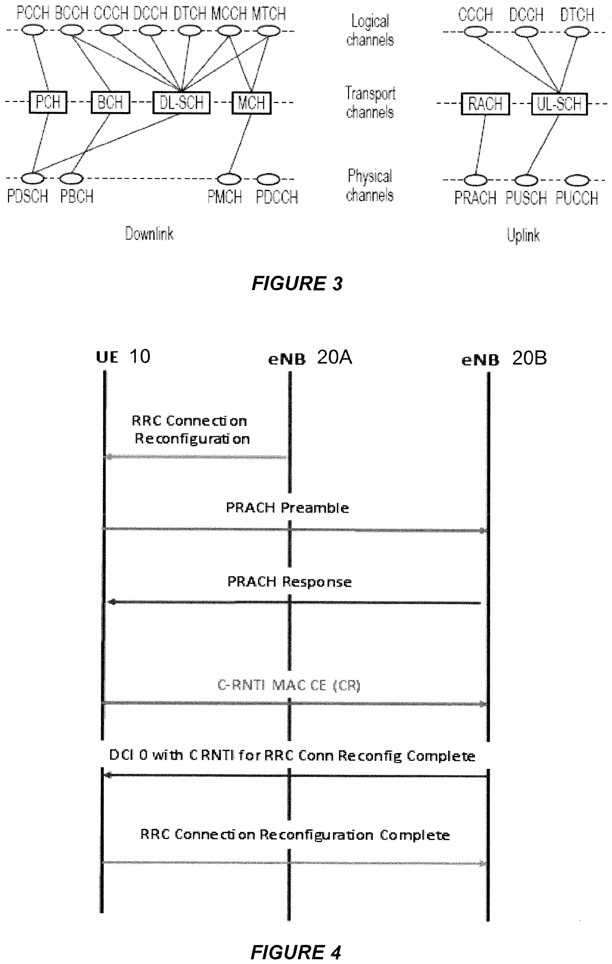

To assist in understanding the invention to be described, some explanation will now be given of "channels" for data and signalling, which are defined at various levels of abstraction within an LTE network. Figure 3 shows some of the channels defined in LTE at each of a logical level, transport layer level and physical layer level, and the mappings between them. A MAC layer (not shown) is responsible for mapping between the logical channels and transport channels. For present purposes, the channels at the physical layer level are of particular interest.

On the downlink, user data is carried on the Physical Downlink Shared Channel (PDSCH). There are various control channels on the downlink, which carry signalling for various purposes including so-called Radio Resource Control (RRC). In particular the Physical Downlink Control Channel, PDCCH, is used to carry scheduling information from base stations (called eNBs in LTE) to individual UEs. The PDCCH is located in the first OFDM symbols of a slot. In LTE-A, there is also provision for a new control channel called EPDCCH or Enhanced PDCCH. This reuses some resource blocks previously used for PDSCH in order to provide additional capacity for supporting multi-carrier and multi-cell scenarios.

Meanwhile, on the uplink, user data and also some signalling data is carried on the Physical Uplink Shared Channel (PUSCH), and control channels include a Physical Uplink Control Channel, PUCCH, used to carry signalling from UEs including channel quality indication (CQI) reports, precoding matrix information (PMI), a rank indication for MIMO (see below), and scheduling requests.

As shown in Figure 3, there is also a Physical Random Access Channel PRACH. UEs which have obtained timing synchronization with the network will be scheduled with uplink resources which are orthogonal to those assigned to other UEs. PRACH is used to carry the Random Access Channel (RACH) for accessing the network if the UE does not have any allocated uplink transmission resource. Thus, initiation by the UE of the transport channel RACH implies use of the corresponding physical channel PRACH, and henceforth the two terms RACH and PRACH will be used interchangeably to some extent.

Thus, RACH is provided to enable UEs to transmit signals in the uplink without having any dedicated resources available, such that more than one terminal can transmit in the same PRACH resources simultaneously. The term "Random Access" is used because (except in the case of contention-free RACH, described below) the identity of the UE (or UEs) using the resources at any given time is not known in advance by the network. So-called "preambles" (see below) are employed by the UEs to allow the eNB to distinguish between different sources of transmission.

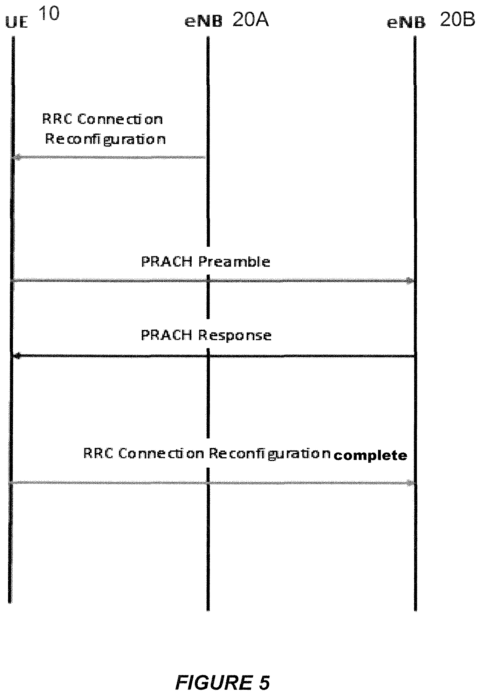

Conventionally, during the handover process of a UE 10 from one eNB 20A to another eNB 20B, a RACH procedure is initiated to achieve UE synchronization with the new eNB 20B as well as carry out RRC connection configuration. The RACH procedure can be contention-based as shown in Figure 4, or contention free as shown in Figure 5.

The process starts with a message "RRC Connection Reconfiguration" transmitted from the existing serving cell eNB 20A in both Figures 4 and 5, and instructing the UE10 to prepare for handover.

For contention-based access (Figure 4) the UE 10 selects, at random, a PRACH Preamble (also called a PRACH signature) according to those available for contention based access and the intended message size, and transmits it to the destination eNB 20B. In the case of contention-free access, the UE 10 employs a PRACH preamble available for contention-free access in the new cell, which has previously been assigned to it by eNB 20A. The eNB 20B receives the PRACH Preamble and estimates the transmission timing of the UE.

The UE 10 monitors a specified downlink channel for a PRACH Response from the network (in other words from the eNB 20B). This contains an UL grant for transmission on PUSCH and a Timing Advance (TA) command for the UE to adjust its transmission timing, as well as (in the case of contention-based access) a Temporary Cell Radio Network Temporary Identifier (T-CRNTI) which it should use in its uplink communications following RACH. In contention-free access, the UE can be assumed already to have a C-RNTI.

For contention-based access, in response to the PRACH Response, the UE 10 transmits a RRC Connection Request (labelled C-RCNTI MAC CE) using the UL grant and TA information contained in the PRACH Response. There is the chance that the same PRACH preamble may coincidentally be chosen by another UE also initiating random access. A contention resolution message (not shown) may be sent from eNB 11 in the event that the eNB 11 received the same preamble simultaneously from more than one UE. If the UE does not receive any response from the eNB, the UE selects a new preamble and sends a new transmission in a RACH sub-frame after a random back-off time.

The eNB 20B responds with a RRC Connection Setup (labelled DCI 0 with CRNTI for RRC Conn Reconfig Complete in Figure 4) by which the eNB responds to the RRC Connection Request, and a reply from the UE in the form of a RRC Connection Reconfiguration Complete message.

The contention-free procedure is simpler in that following the PRACH Response, the UE 10 can respond directly with the RRC Connection Reconfiguration Complete message as shown in Figure 5.

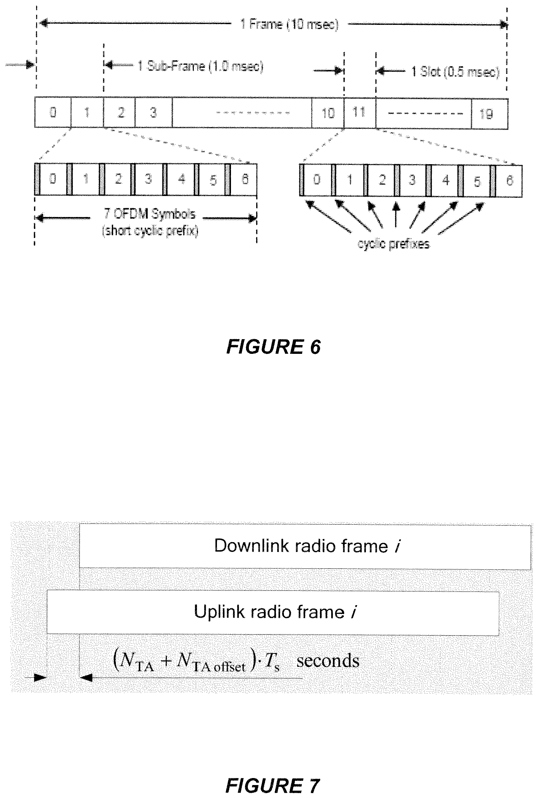

A point of significance for understanding the invention to be described, is the relationship between uplink and downlink timing in a wireless communication system such as LTE. To explain this point, it is necessary firstly to note that data for transmission on the downlink is organised in OFDMA frames each divided into a number of subframes. The frame format differs between FDD (frame structure type 1) and TDD (frame structure type 2) for example. Frames follow successively one immediately after the other, and each is given a system frame number (SFN). Figure 6 shows a generic frame structure for LTE, applicable to the downlink, in which the 10 ms frame is divided into 20 equally sized slots of 0.5 ms. A sub-frame consists of two consecutive slots, so one radio frame contains 10 sub-frames.

In LTE specifications, a UE can be considered as either synchronised or unsynchronised with respect to a cell. The UE becomes synchronized with a cell by detecting primary and secondary synchronization signals PSS/SSS, broadcast by the cell. In the synchronised state, the UE can transmit signals in the uplink (assuming resources are made available by the network, with a defined timing (e.g. with respect to an appropriate downlink). In the unsynchronised state the UE can only transmit RACH in the uplink. A timer is available for a cell (or group of cells) and when the timer expires the UE is considered to be unsynchronised with respect to the cell. Typically the timer is reset whenever the UE receives a timing adjustment (TA) command from the network The purpose of such a timer Is to ensure that the UL DL timing difference does not remain valid indefinitely in the absence of any TA signals from the network.

Thus, one object of the above RACH procedure is to obtain uplink timing for communication with the new eNB, because there is currently no information or assumption available to the UE about the timing relationship required between DL and UL transmissions in the new cell. The aim is usually to arrange for UL transmissions from different UEs to arrive at the cell (or more precisely, at the antennas of the base station providing the cell) with the same timing, in order to minimize interference. In general the appropriate UL/DL timing difference at the UE depends on the propagation delay between the new cell and the UE. As part of the RACH procedure, a time alignment command can be sent to the UE to adjust its uplink transmission timing to align with the required reception timing at the new cell.

Figure 7 shows the relationship between uplink and downlink frame timing according to the LTE standards document 3GPP TS 36.211. The duration of each frame in time is depicted by the boxes labelled "Downlink radio frame *i'* and "Uplink radio frame *i'*, and as can be seen from the Figure, there is a timing difference between the start timing of each frame, labelled (N_{TA} + N_{TAoffset}) x (Tₛ). That is, the UL timing (start of the uplink frame) is offset with respect to the DL timing (start of the downlink frame). As stated in the above 3GPP document, "transmission of the uplink radio frame number *i* from the UE shall start (N_{TA} + N_{TAoffset}) x (Tₛ) seconds before the start of the corresponding downlink radio frame at the UE, where 0 <= N_{TA} <= 20512, N_{TAoffset} = 0 for frame structure type 1 and N_{TAoffset} = 624 for frame structure type 2. Note that not all slots in a radio frame may be transmitted. One example here is TDD, where only a subset of the slots in a radio frame is transmitted."

Thus, conventionally, a UE obtains synchronization with a cell or base station by obtaining the downlink timing through detection of PSS/SSS. Then, the procedure shown in Figures 4 or 5 is needed to obtain the uplink timing from the downlink timing. However, dual connectivity offers the possibility of the macro layer providing assistance to the low-power layer. It would be desirable in the dual connectivity scenario to reduce the physical layer signalling required to achieve a handover and minimise any delay in continuing UL data transmission with the correct uplink timing.

US2014/0086213 A1 discloses that a mobile station (corresponding to the claimed terminal) receives from a first base station a handover command including a timing alignment value for adjusting the uplink timing of the cell of a second base station; then the mobile station performs random access through the cell of the second base station based on the adjusted uplink timing.

US2010/0157906 A1 discloses a method, system and terminal in accordance with the preamble of each independent claim, and proposes that a mobile station assists with synchronizing femto base stations with a macro base station. The macro base station instructs the mobile station to engage in a synchronization operation that synchronizes one or more timings of a femto base station with corresponding timings of the macro base station. This can involve the mobile station performing scanning and/or ranging operations with the femto base station, determining timing offsets between the femto and macro base station, and notifying the macro or femto base stations of the determined offsets.

### Summary of the Invention

According to a first aspect of the present invention, there is provided a wireless communication method in which a terminal is in communication with a first base station and is within communication range of a second base station, the second base station synchronized to the first base station, characterised in that
the first base station provides the terminal with information on how to obtain a timing of uplink transmission to the second base station; and
the terminal synchronizes with the second base station without performing a random access procedure with the second base station.

In the above method, the information provided by the first base station may include information for deriving a timing of uplink transmission to the second base station in the form of:
a timing of uplink transmission to the first base station or another station;
a UL/DL timing difference of the first base station or another station; or
a timing difference with respect to a reference timing.

The information provided by the first base station may include information for deriving a UL/DL timing difference for the second base station, that is, a timing difference of uplink transmission to the second base station with respect to a timing of downlink transmission of the second base station, in the form of:
a UL/DL timing difference of the first base station (20) or of another station;
a predetermined value;
a signalled value; or
a signalled offset with respect to a reference timing difference.

The information provided by the first base station may include information on a timing of downlink transmission of the second base station.

In any method as defined above, the terminal may be in communication with both the first base station, and said another station if any, before the first base station provides said information.

Respective cells may be provided by the second and second base stations. Another way to refer to such a terminal is as being in a "dual connectivity mode" with respect to the first and second base stations.

The first base station may provide a macro cell, and the third station, as well as said another station if any, may provide either a low-power cell or a macro cell.

In any case, preferably, the terminal is in a synchronized state with respect to the first base station, the first base station providing the terminal with a timer value for the second base station, after elapse of which the terminal becomes unsynchronised with respect to the second base station.

The information provided by the first base station may be combined with an instruction to the terminal to connect to the second base station. Thus, the first base station may instruct the terminal, together with or separately from said information, to perform wireless communication with the second base station.

Such wireless communication with the second base station may involve a handover from another station (such as a handover from a cell controlled by the first base station); or alternatively the wireless communication with the second base station may be additional to wireless communication with another station .

According to a second aspect of the present invention, there is provided a wireless communication system comprising a terminal and first and second base stations, the second base station synchronized to the first base station;
the terminal arranged for wireless communication with the first base station and within communication range of the second base station, characterised in that
the first base station is arranged to provide the terminal with information on how to obtain a timing of uplink transmission to the second base station; and
the terminal is arranged to synchronize with the second base station without performing a random access procedure with the second base station.

A further aspect relates to software for allowing transceiver equipment equipped with a processor to provide any station as defined above. Such software may be recorded on a computer-readable medium.

Thus, an embodiment of the present invention may provide a mechanism for allowing a terminal, such as a UE in a dual connectivity mode, to carry out a procedure for secondary cell handover or for adding a secondary cell. The UE does not follow a random access procedure to obtain the timing information of the new secondary cell (cell controlled by the second base station), but instead obtains it from its connection with the master cell (cell controlled by the first base station), thereby saving time. The master cell instructs the UE to initiate wireless connection with the new secondary cell, and indicates, by RRC, MAC or PHY signalling to the UE how to derive the UL timing in the new secondary cell, or the UL/DL timing difference for the new secondary cell. Based on this indication, the UE synchronizes with the new cell. The mechanism applies to both the cases where an additional connection is established or a UE is switched to a different secondary cell.

In general, and unless there is a clear intention to the contrary, features described with respect to one aspect of the invention may be applied equally and in any combination to any other aspect, even if such a combination is not explicitly mentioned or described herein.

As is evident from the foregoing, the present invention involves signal transmissions between stations (terminals and base stations) in a wireless communication system. A station may take any form suitable for transmitting and receiving such signals. It is envisaged that the base stations will typically take the form proposed for implementation in the 3GPP LTE and 3GPP LTE-A groups of standards, and may therefore be described as an eNB (eNodeB) (which term also embraces Home eNB or HeNB) as appropriate in different situations. However, subject to the functional requirements of the invention, some or all base stations may take any other form suitable for transmitting and receiving signals from other stations.

Similarly, in the present invention, a terminal may take any form suitable for transmitting and receiving signals from base stations. For example, the user equipment may take the form of a subscriber station (SS), or a mobile station (MS), or any other suitable fixed-position or movable form. For the purpose of visualising the invention, it may be convenient to imagine the terminal as a mobile handset (and in many instances at least some of the terminal will comprise mobile handsets), however no limitation whatsoever is to be implied from this.

It may be convenient to refer to base stations as providing "cells"; however, definition of cells is not a prerequisite for the invention. In any case, the term "cell" in this specification is to be interpreted broadly. For example, it is possible to refer to communication channels associated with a cell being transmitted from or by the cell (in the downlink), or transmitted to a cell (in the uplink), even if the transmission or reception is actually carried out by one or more antennas or antenna ports of a base station. The term "cell" is intended also to include sub-cells, which could be sub-divisions of a cell based on using particular antennas or corresponding to different geographical areas within a cell. References to performing certain actions "at a cell" generally implies performing those actions in a base station which provides that cell. The cells may be associated with different base stations or with the same base station. In the context of D2D communication, the term "base station" can also include a terminal.

### Brief Description of the Drawings

Reference is made, by way of example only, to the accompanying drawings in which:
Figure 1 illustrates a basic system architecture in LTE;
Figure 2 illustrates a Small Cell Network, SCN;
Figure 3 shows the mapping between logical channels, transport channels and physical channels in LTE;
Figure 4 shows a contention-based random access procedure in LTE;
Figure 5 shows a contention-free random access procedure in LTE;
Figure 6 illustrates a generic frame structure used in LTE;
Figure 7 illustrates the timing relationship between UL and DL timing in LTE;
Figure 8 is a flowchart of steps in a method embodying the present invention;

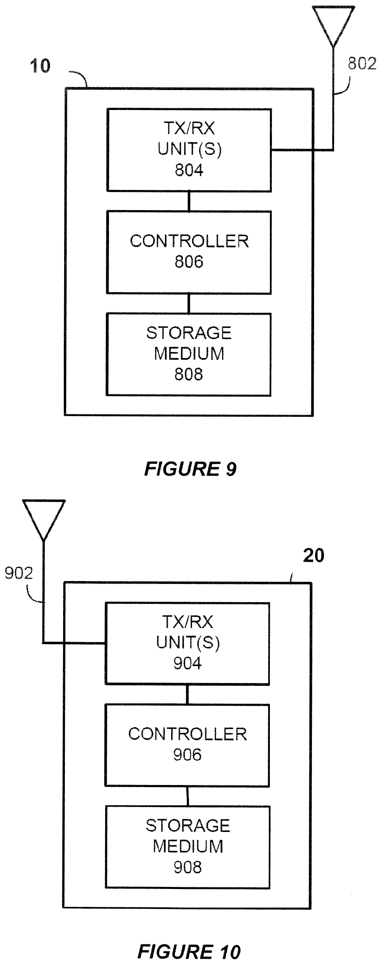

Figure 9 is a schematic block diagram of a UE to which the present invention may be applied; and
Figure 10 is a schematic block diagram of an eNB to which the present invention may be applied.

### Detailed Description

Embodiments of the present invention will now be described by referring, for convenience, to a UE as an example of the "terminal" referred to in the Summary section, and referring to "base stations" providing "cells" as the first and second base stations of the Summary section.

As already mentioned, in the dual connectivity mode, a UE is simultaneously connected to cells controlled by a master eNB (MeNB) and a secondary eNB. The master eNB usually (but not necessarily) provides a macro cell with wide coverage area and the secondary eNB usually provides a local/small cell. Currently, RRC signalling (i.e., higher-level communication related to radio communication) is only provided via the master eNB.

If there is a change of location involved with the UE, a possible situation that may arise is that while a macro cell can maintain its connection with the UE, the UE may move out of the coverage area of the local cell, and thus a handover procedure may be needed in order to be connected to a new cell and possibly a new secondary eNB.

In order to minimise interruption to data flow to/from cells controlled by the new secondary eNB, it would be desirable to reduce the physical layer signalling required to achieve a handover and minimise any delay in continuing UL data transmission with the correct uplink timing. The inventors have realised that the random access procedure may be avoided should the UE uplink timing information be obtained via its maintained connection with the master eNB. The principle of the invention will now be explained.

In the scenario where the proposed solution is envisaged to apply, a UE is simultaneously connected to a master eNB and a secondary eNB, i.e. it is in a dual connectivity mode. When a UE is leaving the coverage area of a secondary cell and enters coverage area of a new local/secondary cell, a handover procedure can happen to allow the UE to be connected to the new secondary cell, a process during which, its connection to the master eNB is typically unchanged.

The invention is based on the recognition that the timing adjustment part of the RACH procedure may not be required. For example this could be because:
a) The current and new cells are synchronized and propagation delays can be ignored (e.g. because the cell sizes are small enough). Therefore both the same DL timing and UL/DL timing difference can be assumed in the new cell and the existing UL timing can also be used in the new cell (with the UL timing in the new cell being derived from the DL timing in the current cell); or
b) In both the current and new cells propagation delays can be ignored (e.g. because the cell sizes are small enough) or the same propagation delay can be assumed. Therefore the same UL/DL timing difference can be assumed in the new cell as in the current cell (with the UL timing in the new cell being derived from the DL timing in the new cell); or
c) There are no other users currently being served in the new cell. Therefore no particular UL timing is required to minimize interference and the existing UL/DL timing difference, or a predetermined UL/DL timing difference, can be used in the new cell (with the UL timing in the new cell being derived from the DL timing in the new cell); or
d) The required UL/DL timing difference in the new cell is known. If this difference is known to the network it can be signalled to the UE (with the UL timing in the new cell being derived from the DL timing in the new cell).

Given that the UE connection to the master eNB is unchanged during the secondary eNB handover process, a principle of the invention is to omit at least part of the RACH procedure, and use information supplied from the network (below referred to as timing synchronization information) to facilitate the synchronization with the new secondary eNB. It will be noted that cases a) and b) set out above differ in that in case a), the UL timing in the new cell is derived from DL timing in the current cell; in case b) the UL timing is derived from the DL timing in the new cell. This requires in case b) that the UE receives a signal from the new cell in order to work out the new cell DL timing. Likewise, in cases c) and d) the UE only needs to find out the DL timing in the new cell. PSS/SSS of the new cell would be a convenient signal for this purpose, possibly supplemented by other signals such as a cell-specific reference signal, CRS.

Some embodiments of the present invention will now be described.

In general, unless otherwise indicated, the embodiments described below are based on LTE, where the network comprises multiple eNBs, each controlling one or more downlink cells, and at least some of the downlink cells having a corresponding uplink cell. Each DL cell may serve one or more terminals (UEs) which may receive and decode signals transmitted in that serving cell. When a UE is leaving the coverage area of one cell and entering that of another, a handover process may be initiated by the network. During a handover process, when a UE does not have sufficient timing information for uplink data transmission the new cell, conventionally the UE needs to send RACH signals in order to establish timing information.

A scenario of particular relevance to the present invention is the LTE dual connectivity mode. A UE in dual connectivity mode is simultaneously connected to cells provided by multiple eNBs, which typically include a master eNB and one or more secondary eNBs. The master eNB provides a "master" cell (often but not necessarily a macrocell) and the secondary eNB usually provides a local/small cell (also referred to as "secondary" cell). There may be multiple secondary cells; for example a handover is possible from a current or "original" secondary cell with which the UE is already connected, to a destination or "new" secondary cell.

In a first embodiment, for a UE in dual connectivity mode with a first cell provided by master eNB and a secondary cell provided by a secondary eNB, if a handover is initiated to allow the UE to be connected to a new secondary cell instead of the original secondary cell, the UE may be instructed to omit the use of RACH to achieve synchronization with the new secondary eNB, but instead receives higher layer signalling via its link with the master eNB to receive timing information and achieve timing synchronization with the new secondary cell.

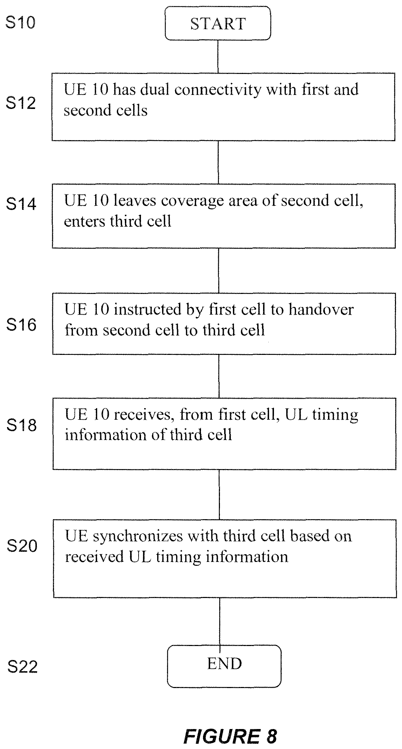

The operation in this embodiment is outlined in the flowchart of Figure 8.

The process starts at S10. To begin with (S12), as already mentioned, it is assumed that a UE 10 has dual connectivity with the first cell and original secondary cells, where the first cell (for example, macro cell) is provided by a master eNB, and the original secondary cell (for example, low-power cell) by a secondary eNB.

Next, in S14, the UE leaves the coverage area of the original secondary cell. Typically, this would occur due to mobility of a user of the UE, although a change in the original secondary cell (such as deactivation) could have the same result.

In S16, the network determines in some way that the UE should hand over from the original secondary cell to a new secondary cell, controlled by a secondary eNB (usually but not necessarily a different secondary eNB from that of the original secondary cell). Usually, this determination would be prompted by measurement reports from the UE regarding signal strength from the respective cells. As noted later, this is only an example, and it may be possible for the UE to retain its connection with the original secondary cell. The new secondary cell may be a low-power cell like the original secondary cell, but could alternatively be a macro cell. As part of the handover process, the UE detects PSS/SSS and thereby determines the DL timing in the new secondary cell.

In S18, the network (via the master eNB) provides higher-level signalling to inform the UE how to derive the UL timing in the new secondary cell. This signalling is possible in various ways as explained below.

Finally, in S20 the UE synchronizes with the new secondary cell on the basis of the received information, without having to perform the conventional RACH procedure. The process ends at S22.

The higher layer signalling (e.g. RRC signalling) may comprise one or both of the following kinds of timing synchronization information:
- An indication of how the UE should derive the UL timing for the new secondary cell for example:
   ∘ the same as for the first cell, or
   ∘ the same as for original secondary cell, or
   ∘ from a signalled offset with respect to a reference (such as the UL or DL timing of another cell), or
   ∘ by sending RACH
- An indication of how the UE should derive the UL/DL timing difference for the new secondary cell for example:
   ∘ the same as for the first cell, or
   ∘ the same as for original secondary cell, or
   ∘ from a pre-determined value, or
   ∘ from a signalled value, or
   ∘ from a signalled offset with respect to a reference (such as the UL or DL timing of another cell), or
   ∘ by sending RACH.

The "another cell" referred to above could be any of the first, original secondary and new secondary cells. Alternatively any other available timing reference could be used, including from a further cell or from a positioning system such as GPS. The "pre-determined value" referred to above may be a value received from the network at an earlier time, and stored in the UE. The distinction between "signalled value" and "signalled offset" above is that "value" denotes an absolute time reference whilst "offset" is a relative value to be added or subtracted from another reference value. The final item listed above, "by sending RACH", simply means that if none of the signalling is sufficient to determine UL timing, then the UE can assume that it should transmit RACH on the new secondary cell uplink, according to the existing handover procedure.

A variation of the first embodiment is that, instead of connecting to a new secondary cell and disconnecting from the original secondary cell, the UE establishes a connection to a new secondary cell in addition to the original secondary cell, a process after which a UE is connected to a master eNB and multiple cells controlled by one or more secondary eNBs.

In another variation of the first embodiment, instead of using higher-level signalling (RRC) to inform the UE how to derive the UL timing for the new cell, this timing synchronization information is transmitted to the UE via the master eNB using physical layer signalling such as PDCCH or EPDCCH.

In a further variation of the first embodiment, a MAC layer message is used instead of RRC to transmit the timing synchronization information.

A second embodiment is like the first embodiment except that there is no "original secondary cell" and the "handover" procedure leads to the new secondary cell serving the UE in addition to the first cell. In this case, the UE may be instructed to omit the use of RACH to achieve synchronization with the new secondary eNB, but instead receives higher layer signalling via its link with the master eNB to receive timing synchronization information and achieve timing synchronization with the new secondary cell. The higher layer signalling (e.g. RRC signalling) may comprise one or more of the following:
- An indication of how the UE should derive the UL timing for the new secondary cell for example:
   ∘ the same as for the first cell, or
   ∘ from a signalled offset with respect to a reference (such as the UL or DL timing of another cell), or
   ∘ by sending RACH
- An indication of how the UE should derive the UL/DL timing difference for the new secondary cell for example:
   ∘ the same as for the first cell, or
   ∘ from a pre-determined value, or
   ∘ from a signalled value, or
   ∘ from a signalled offset with respect to a reference (such as the UL or DL timing of another cell), or
   ∘ by sending RACH.

If none of the signalling is sufficient to determine UL timing, then the UE can assume that it should transmit RACH on the new secondary cell uplink, according to the existing handover procedure.

A third embodiment is like the first or second embodiments, except that UE has a synchronised and an unsynchronised state with respect to each cell (or group of cells). In the unsynchronised state the only UL signal that the UE may transmit Is PRACH. The network provides the UE with a timer value for each cell.

When the duration of the timer value has elapsed following the timer being reset, the UE state becomes unsynchronised with respect to that cell. The timer may be reset when a command to adjust UL timing, or other suitable signalling (such as an indication of how to derive UL timing), is received from the network.

In a variation of the third embodiment, the UE may transmit other signals such as SRS (Sounding Reference Signal) in the unsynchronised state.

In a further variation of the third embodiment, there is an additional synchronisation state intermediate between synchronised and unsynchronised. In the intermediate state the UE may transmit a limited set of signals (e g SRS, PRACH).

In the fourth embodiment, the UE determines the uplink timing in the new cell implicitly (that is, without receiving explicit timing synchronization information from the master eNB). Some possible cases where RACH might be sent without an explicit indication include:
- Where the DL timing of the new cell is found to be the same as in the current cell, and by inference the UL timing can be assumed to be the same also. This could be restricted to the case where both cells are in the same frequency band (which means that the same cell-site location can be more safely assumed).
- Where both the cells are TDD (in which case good synchronisation may be assumed, since it is necessary to avoid interference). This could be restricted to the case where both cells are in the same frequency band.
- Where the new cell is known to the UE not to be currently supporting any UEs (e.g. it may be temporarily switched "off', and indicated as such, but is to be switched "on" when It starts to serve the UE).
- Or simply on a "try it and see" basis, where the UE attempts communication without being certain of the UL timing in the new cell.

Thus, to summarise, embodiments of the present invention may provide a novel mechanism allowing a UE in a dual connectivity mode in an LTE system to carry out a procedure for secondary cell handover. In the proposed mechanism, the UE does not apply the random access procedure as stated in the current LTE specifications to obtain the timing information of the new secondary cell, but instead obtains from the master cell/eNB information on how to derive the timing information.

Various modifications are possible within the scope of the present invention.

As already mentioned, the term "cells" in the above description is to be interpreted broadly. Cells need not each have a different geographical area, or a different base station. In general, cells can be defined on a downlink, uplink, or on both.

For convenience, the invention has been described with respect to specific cells. However, the invention can be applied without the necessity for cells, and may be described in terms of the communications between different stations (including base stations supporting cells, mobile stations, and other types of station such as relays).

The invention is equally applicable to LTE FDD and TDD, and to mixed TDD/FDD implementations (i.e. not restricted to cells of the same FDD/TDD type). The principle can be applied to other communications systems such as UMTS. Accordingly, references in the claims to "user equipment" are intended to cover any kind of subscriber station, mobile terminal and the like and are not restricted to the UE of LTE.

Although in the above embodiments, the indication regarding UL timing in the new cell is provided along with a handover instruction, there is no need for the two signals to be transmitted simultaneously. The indication may be provided before, simultaneously with, or after the handover instruction and need not be given at the same protocol layer as the handover instruction. That is, any of RRC, MAC or PHY signalling may be used to indicate timing information. Moreover, as already mentioned the instruction need not be a handover but rather, may involve adding an additional serving cell or an additional wireless link whilst keeping existing connections.

For convenience, it was assumed above that the master and secondary cells have different respective base stations, but this is not essential. For example, the master cell and the original secondary cell may be provided by the same base station, with the new secondary cell provided by a second base station. Alternatively, the old and new secondary cells may share the same base station. Any combination is possible, as will be apparent to those skilled in the art. Where the master eNB provides the new secondary cell, the timing synchronization information could include an explicit specification of the DL and/or UL timing, which would be known to the master eNB.

In any of the aspects or embodiments of the invention described above, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein.

A computer program embodying the invention may be stored on a computer-readable medium, or it may, for example, be in the form of a signal such as a downloadable data signal provided from an Internet website, or it may be in any other form.

It is to be clearly understood that various changes and/or modifications may be made to the particular embodiment just described without departing from the scope of the claims.

### Industrial Applicability

The present invention is of application to dual-connected stations in a wireless communication system. During a secondary cell handover process for a station in dual connectivity mode, the station can avoid using the more time consuming random access process and obtain required timing information via an existing connection to another station such as a master eNB. Consequently the station is able to communicate useful data more quickly with the new secondary cell. The invention applies to both the cases where a new connection is established or a station is switched to a different secondary cell.

## Claims

1. A wireless communication method in which a terminal (10) is in communication with a first base station (20) and is within communication range of a second base station (21), the second base station (21) synchronized to the first base station (20), **characterised in that**:
the first base station (20) provides the terminal (10) with information on how to obtain a timing of uplink transmission to the second base station (21); and
the terminal (10) synchronizes with the second base station (21) without performing a random access procedure with the second base station (21).

2. The method according to claim 1 wherein the information provided by the first base station (20) includes information for deriving a timing of uplink transmission to the second base station (21) in the form of:
a timing of uplink transmission to the first base station (20) or another station;
a UL/DL timing difference of the first base station (20) or another station; or
a timing difference with respect to a reference timing.

3. The method according to claim 1 or 2 wherein the information provided by the first base station (20) includes information for deriving a UL/DL timing difference for the second base station (21), that is, a timing difference of uplink transmission to the second base station (21) with respect to a timing of downlink transmission of the second base station (21), in the form of:
a UL/DL timing difference of the first base station (20) or of another station;
a predetermined value;
a signalled value; or
a signalled offset with respect to a reference timing difference.

4. The method according to any preceding claim wherein the information provided by the first base station (20) includes information on a timing of downlink transmission of the second base station (21).

5. The method according to any preceding claim, wherein the terminal (10) is in communication with both the first base station (20), and said another station if any, before the first base station (20) provides said information.

6. The method according to any preceding claim, wherein the first base station (20) provides a macro cell, and the second base station (21), as well as said another station if any, provides either a low-power cell or a macro cell.

7. The method according to any preceding claim further comprising the terminal (10) being in a synchronized state with respect to the first base station (20), the first base station (20) providing the terminal (10) with a timer value for the second base station (21), after elapse of which the terminal (10) is unsynchronised with respect to the second base station (21).

8. The method according to any preceding claim wherein the first base station (20) instructs the terminal (10), together with or separately from said information, to initiate wireless communication with the second base station (21).

9. The method according to claim 8 wherein initiating the wireless communication with the second base station (21) involves a handover from another station.

10. The method according to claim 8 wherein the wireless communication with the second base station (21) is additional to wireless communication with another station.

11. A wireless communication system comprising a terminal (10) and first and second base stations (20, 21), the second base station (21) synchronized to the first base station (20);
the terminal (10) arranged for wireless communication with the first base station (20) and within communication range of the second base station (21), **characterised in that**
the first base station (20) is arranged to provide the terminal (10) with information on how to obtain a timing of uplink transmission to the second base station (21), and
the terminal is arranged to synchronize with the second base station (21) without performing a random access procedure with the second base station (21).

## Patentansprüche

1. Drahtloses Kommunikationsverfahren, bei dem ein Terminal (10) mit einer ersten Basisstation (20) in Kommunikation ist und innerhalb eines Kommunikationsbereichs einer zweiten Basisstation (21) ist, die zweite Basisstation (21) mit der ersten Basisstation (20) synchronisiert ist, **dadurch gekennzeichnet, dass**
die erste Basisstation (20) das Terminal (10) mit der Information darüber bereitstellt, wie ein Timing einer Uplink-Übertragung an die zweite Basisstation (21) erhalten wird; und
das Terminal (10) die zweite Basisstation (21) ohne Durchführen eines Direktzugriffsverfahrens mit der zweiten Basisstation (21) synchronisiert.

2. Verfahren nach Anspruch 1, wobei die von der ersten Basisstation (20) bereitgestellten Informationen die Information zum Ableiten eines Timings einer Uplink-Übertragung an die zweite Basisstation (21) einschließen in der Form von:
einem Timing einer Uplink-Übertragung zur ersten Basisstation (20) zu einer anderen Basisstation;
einer UL/DL-Timingdifferenz der ersten Basisstation (20) oder einer anderen Basisstation; oder
einer Timingdifferenz in Bezug auf ein Referenz-Timing.

3. Verfahren nach Anspruch 1 oder 2, wobei die von der ersten Basisstation (20) bereitgestellten Informationen Informationen zum Ableiten einer UL/DL-Timingdifferenz für die zweite Basisstation (21) einschließen, d. h. eine Timingdifferenz einer Uplink-Übertragung zur zweiten Basisstation (21) in Bezug auf ein Timing einer Downlink-Übertragung der zweiten Basisstation (21) in der Form von:
einer UL/DL-Timingdifferenz der ersten Basisstation (20) oder einer anderen Station;
einem vorbestimmten Wert;
einem signalisierten Wert; oder
einem signalisierten Offset in Bezug auf eine Referenz-Timingdifferenz.

4. Verfahren nach irgendeinem der voranstehenden Ansprüche, wobei die von der ersten Basisstation (20) bereitgestellten Informationen Informationen über ein Timing einer Downlink-Übertragung der zweiten Basisstation (21) einschließen.

5. Verfahren nach irgendeinem der voranstehenden Ansprüche, wobei das Terminal (10) sowohl mit der ersten Basisstation (20) als auch, sofern vorhanden, mit der anderen Station in Kommunikation ist, bevor die erste Basisstation (20) die Informationen bereitstellt.

6. Verfahren nach irgendeinem der voranstehenden Ansprüche, wobei die erste Basisstation (20) eine Makrozelle bereitstellt und die zweite Basisstation (21) sowie, soweit vorhanden, die andere Station entweder eine Schwachstromzelle oder eine Makrozelle bereitstellt/bereitstellen.

7. Verfahren nach irgendeinem der voranstehenden Ansprüche, weiterhin umfassend das Terminal (10), das in Bezug auf die erste Basisstation (20) in einem synchronisierten Zustand ist, wobei die erste Basisstation (20) dem Terminal (10) einen Timer-Wert für die zweite Basisstation (21) nach dem Ablauf, nach dem das Terminal (10) in Bezug auf die zweite Basisstation (21) nicht synchronisiert ist, bereitstellt.

8. Verfahren nach irgendeinem der voranstehenden Ansprüche, wobei die erste Basisstation (20) das Terminal (10) anweist, zusammen mit oder getrennt von den Informationen, eine drahtlose Kommunikation mit der zweiten Basisstation (21) zu initiieren.

9. Verfahren nach Anspruch 8, wobei das Initiieren der drahtlosen Kommunikation mit der zweiten Basisstation (21) eine Übergabe von einer anderen Station impliziert.

10. Verfahren nach Anspruch 8, wobei die drahtlose Kommunikation mit der zweiten Basisstation (21) zusätzlich zur drahtlosen Kommunikation mit der anderen Station ist.

11. Drahtloses Kommunikationssystem, umfassend ein Terminal (10) und eine erste und zweite Basisstation (20, 21), wobei die zweite Basisstation (21) mit der ersten Basisstation (20) synchronisiert ist;
Terminal (10), das zur drahtlosen Kommunikation mit der ersten Basisstation (20) und innerhalb des Kommunikationsbereichs der zweiten Basisstation (21) angeordnet ist, **dadurch gekennzeichnet, dass**
die erste Basisstation (20) angeordnet ist, um dem Terminal (10) Informationen darüber bereitzustellen, wie ein Timing einer Uplink-Übertragung zur zweiten Basisstation (21) erhalten wird, und
das Terminal angeordnet ist, um sich mit der zweiten Basisstation (21) zu synchronisieren, ohne ein Direktzugriffsverfahren mit der zweiten Basisstation (21) durchzuführen.

## Revendications

1. Procédé de communication sans fil dans lequel un terminal (10) est en communication avec une première station de base (20) et se trouve dans une plage de communication d'une seconde station de base (21), la seconde station de base (21) étant synchronisée avec la première station de base (20), **caractérisé en ce que** :
la première station de base (20) fournit au terminal (10) des informations concernant la manière d'obtenir un cadencement de transmission en liaison montante vers la seconde station de base (21) ; et
le terminal (10) se synchronise avec la seconde station de base (21) sans effectuer de procédure d'accès aléatoire avec la seconde station de base (21).

2. Procédé selon la revendication 1, dans lequel les informations fournies par la première station de base (20) comprennent des informations pour dériver un cadencement de transmission en liaison montante vers la seconde station de base (21) sous la forme :
d'un cadencement de transmission en liaison montante vers la première station de base (20) ou une autre station ;
d'une différence de cadencement UL/DL de la première station de base (20) ou d'une autre station ; ou
d'une différence de cadencement par rapport à un cadencement de référence.

3. Procédé selon la revendication 1 ou 2, dans lequel les informations fournies par la première station de base (20) comprennent des informations pour dériver une différence de cadencement UL/DL pour la seconde station de base (21), c'est-à-dire une différence de cadencement de transmission en liaison montante vers la seconde station de base (21) par rapport à un cadencement de transmission en liaison descendante de la seconde station de base (21), sous la forme :
d'une différence de cadencement UL/DL de la première station de base (20) ou d'une autre station ;
d'une valeur prédéterminée ;
d'une valeur signalée ; ou
d'un décalage signalé par rapport à une différence de cadencement de référence.

4. Procédé selon l'une quelconque des revendications précédentes, dans lequel les informations fournies par la première station de base (20) comprennent des informations concernant un cadencement de transmission en liaison descendante de la seconde station de base (21).

5. Procédé selon l'une quelconque des revendications précédentes, dans lequel le terminal (10) est en communication avec à la fois la première station de base (20) et ladite éventuelle autre station, avant que la première station de base (20) ne fournisse lesdites informations.

6. Procédé selon l'une quelconque des revendications précédentes, dans lequel la première station de base (20) fournit une macro-cellule, et la seconde station de base (21), ainsi que ladite éventuelle autre station, fournissent une cellule de faible puissance ou une macro-cellule.

7. Procédé selon l'une quelconque des revendications précédentes, comprenant en outre que le terminal (10) est dans un état synchronisé par rapport à la première station de base (20), la première station de base (20) fournissant au terminal (10) une valeur de temporisation pour la seconde station de base (21), après laquelle le terminal (10) est désynchronisé par rapport à la seconde station de base (21).

8. Procédé selon l'une quelconque des revendications précédentes, dans lequel la première station de base (20) ordonne au terminal (10), conjointement ou séparément desdites informations, d'initier une communication sans fil avec la seconde station de base (21).

9. Procédé selon la revendication 8, dans lequel l'initiation de la communication sans fil avec la seconde station de base (21) implique un transfert intercellulaire à partir d'une autre station.

10. Procédé selon la revendication 8, dans lequel la communication sans fil avec la seconde station de base (21) est additionnelle à une communication sans fil avec une autre station.

11. Système de communication sans fil comprenant un terminal (10) et des première et seconde stations de base (20, 21), la seconde station de base (21) étant synchronisée avec la première station de base (20) ;
le terminal (10) étant conçu pour une communication sans fil avec la première station de base (20) et dans une plage de communication de la seconde station de base (21), **caractérisé en ce que**
la première station de base (20) est conçue pour fournir au terminal (10) des informations concernant la manière d'obtenir un cadencement de transmission en liaison montante vers la seconde station de base (21), et
le terminal est conçu pour se synchroniser avec la seconde station de base (21) sans effectuer de procédure d'accès aléatoire avec la seconde station de base (21).
